**Europäisches Patentamt**

**European Patent Office**

**Office européen des brevets**

(11) Veröffentlichungsnummer: **0 510 592 A2**

# EUROPÄISCHE PATENTANMELDUNG

(21) Anmeldenummer: **92106832.6**

(51) Int. Cl.⁵: **B29C 45/17**

(22) Anmeldetag: **22.04.92**

(30) Priorität: **25.04.91 DE 4113501**

(43) Veröffentlichungstag der Anmeldung:
**28.10.92 Patentblatt 92/44**

(84) Benannte Vertragsstaaten:
**AT DE FR GB IT**

(71) Anmelder: **GNEUSS KUNSTSTOFFTECHNIK GmbH**
**Mönichhusen 42**
**W-4970 Bad Oeynhausen(DE)**

(72) Erfinder: **Der Erfinder hat auf seine Nennung verzichtet**

(74) Vertreter: **Grosse, Dietrich, Dipl.-Ing. et al**
**Patentanwälte**
**HEMMERICH-MÜLLER-GROSSE-POLLMEIER--**
**VALENTIN-GHISKE Hammerstrasse 2**
**W-5900 Siegen 1(DE)**

(54) **Filter für Kunststoffschmelzen.**

(57) Die Siebpakete sowie die diese stützenden Lochplatten eines Schmelzefilters sind jeweils in Haltern 16 untergebracht, die in Ausnehmungen einer Schwinge oder einer Scheibe 5 zwischen einer Deckplatte 1 und einer Grundplatte 3 geführt werden. Die Halter 16 weisen einseitig eine Kalotte 23 zum Ansetzen einer Düse eines Spritzgußaggregates auf, und sie stützen sich rückseitig gegen eine ringförmige Stützfläche ab, die den Schmelzeeintritt in das Werkzeug umschließt. Damit wird erreicht, daß nur während des Schusses des Spritzgußaggregates der jeweils in Arbeitsstellung befindliche Halter dichtend gegen seine Unterlage gepreßt wird, so daß der Anpreßdruck der Düse eine vollkommene Abdichtung zu sichern vermag und die Scheibe selbst sowie die nicht in ihrer Arbeitsstellung befindlichen Halter nicht beansprucht werden. Nach der Beendigung des Schusses inklusive des erforderlichen Nachdruckes wird die Düse des Spritzgußaggregates zurückgezogen, so daß nunmehr die Scheibe mit allen Haltern frei beweglich ist und ein Transport des folgenden Halters in die Arbeitsstellung 21 ohne wesentliche Belastung und unter äußerster Schonung der Dichtflächen bewirkbar ist.

Fig.1

EP 0 510 592 A2

Die Erfindung betrifft einen Schmelzefilter für die Reinigung von Kunststoffschmelzen von Spritzgießmaschinen mit einer Schwinge, mittels derer Filter mit diese stützenden Lochplatten in den der Plastifiziereinheit nachgeordneten Schmelzekanal einbringbar sind. Nach Detlef Gneuß: Filtration von Kunststoffschmelzen, 1988, können als Plastifiziereinheiten vorgesehenen Ex0trudern stationäre Filter (Abb. 9) oder auch Siebscheibenwechsler (Abb. 12) zugeordnet werden. In beiden Fällen jedoch macht sich nachteilig bemerkbar, daß die die Lochplatte und das durch diese abgestütze Siebpaket tragenden Bauteile dem am Ausgang des Extruders auftretenden Druck ausgesetzt sind und fest und abgedichtet gegen diesen zu verspannen sind. Bei stationären Filtern genügt im allgemeinen ein mit dem Extruder zu verspannender Filterblock, bei Siebscheibenwechslern jedoch sind mit dem Extruder ein Filtereinlaufblock, eine Wechselschwinge und ein Filterauslaufblock abgedichtet zu verspannen. Im allgemeinen werden hier metallische Dichtungen verwendet, von anderen Herstellern jedoch werden weichmetallische Dichtungen eingesetzt, die einen Siebwechsel unter Arbeitsdruck nicht oder nur bedingt zulassen.

Die Erfindung geht von der Aufgabe aus, einen Schmelzefilter der bezeichneten Gattung zu schaffen, welcher einen einfachen Wechsel der Filter erlaubt und das Problem der Abdichtung derart entschärft, daß es leicht beherrschbar wird.

Gelöst wird diese Aufgabe, indem bei einem Schmelzefilter der vorbezeichneten Gattung die Filter und diese stützende Lochplatten aufweisende Schwinge oder über die den Schmelzeeintritt und den Schmelzeverteilkanal zum Aufnehmen der von einem Spritzgießaggregat abgegebenen Schmelze aufweisende Flanke des Werkzeuges geführt ist, und indem die Scheibe oder Schwinge Halter umgreift, welche eingangsseitig mit einer Kalotte zum dichtenden Ansetzen der Düse des Spritzgießaggregates ausgestattet sind, und die ausgangsseitig die eingebrachten Siebpakete abstützenden Lochplatten aufweisen. Damit ist der Schmelzefilter aus dem direkten Bereich der Plastifiziereinheit herausgenommen und zwischen der Düse des Spritzgießaggregates und dem Werkzeug angeordnet. Als Folge hiervon ist der Schmelzefilter nicht während der gesamten Arbeitszeit der Plastifiziereinheit des Spritzgießaggregates mit Druck belastet, sondern nur während des Schusses selbst. Hinzu kommt, daß ohnehin die Düse eines üblichen Spritzgießaggregates während der Durchführung des Schusses so fest auf die die Schmelze aufnehmende Kalotte des Werkzeuges gepreßt ist, daß bei der Zwischenschaltung eines Halters des Schmelzefilter einerseits die Düse des Spritzgießaggregates fest und damit dichtend auf die Kalotte des Halters gedrückt wird, während dieser, relativ lose in der Scheibe geführt, seinerseits mit seiner Grundfläche dichtend fest gegen die ihn abstützende Stützfläche des Werkzeuges bzw. der Grundplatte gedrückt wird. Es genügt also völlig, die Kalotte des Halters und die Düse des Spritzgießaggregates so auszuführen, wie diese üblich ausgebildet sind, und die Stützfläche des Werkzeuges und die Grundfläche des Halters so fein zu bearbeiten, daß bei dem ausgeübten Andruck die gewünschte Abdichtung erreicht wird.

Nach dem Schuß und dem anschließenden Nachdrücken werden die Düse angehoben und damit der auf den Halter ausgeübte Druck reduziert. Da aber auch die Schmelze entlastet ist, bestehen keine Dichtprobleme mehr, und nach entsprechender Standzeit des Siebpaketes kann die Schwinge bzw. Scheibe weitergedreht werden und den nächsten Halter mit Lochscheibe und Siebpackung in den Schmelzekanal einbringen, ohne durch dichtendes Andrücken behindert zu sein.

Zweckmäßige und vorteilhafte Weiterbildungen der Erfindung sind in den Unteransprüchen gekennzeichnet.

Im einzelnen sind die Merkmale der Erfindung anhand der folgenden Beschreibung eines Ausführungsbeispieles in Verbindung mit dieses darstellenden Zeichnungen erläutert. Es zeigen hierbei:

Figur 1    eine teilweise aufgebrochene Ansicht des Schmelzefilters, und

Figur 2    in vergrößertem Maßstabe einen im wesentlichen den in Arbeitsstellung stehenden Halter aufzeigenden Querschnitt.

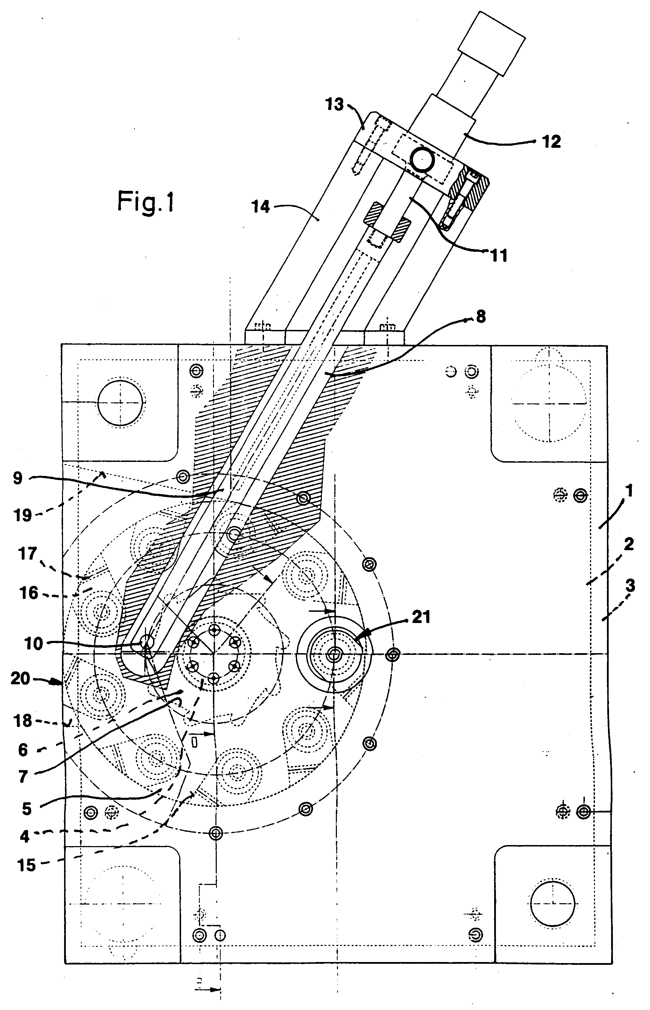

In der Figur 1 ist in teilweiser aufgebrochener Ansicht ein Schmelzefilter dargestellt, dessen Grundkörper im wesentlichen aus drei gegeneinander verspannten Platten besteht: Die Deckplatte 1 ist über ein Distanzstück 2 gegen eine Grundplatte 3 verspannt.

Mit der Deckplatte 1 ist weiterhin ein zur Zentrierung teilweise in die Unterseite der Deckplatte 1 eingelassener Zylinderblock 4 verspannt. Um den Zylinderblock als Achse vermag sich eine Scheibe 5 zu drehen, die, in geringem Abstande von ihrer Bohrung beginnend, eine von oben her in sie eingearbeitete Ausnehmung 6 aufweist, deren innere Begrenzung als zylindrischer Absatz ausgeführt ist, und deren äußere Begrenzung als Klinkenrad 7 ausgebildet ist.

In die Deckplatte 1 ist ein nach unten, d. h., zum Distanzstück 2 und zur Scheibe 5 hin, offener Kanal 8 eingearbeitet, in dem ein Flachstahl 9 verschieblich ist, dessen freies Ende mit einem querstehenden, in das Klinkenrad 7 eingreifenden Schaltbolzen 10 ausgestattet ist. Das andere Ende des Flachstahles 9 ist mit der Kolbenstange 11 eines Druckmittelzylinders 12 verbunden, der schwenkbar in einen Rahmen 13 eingehängt ist, der von Streben 14 getragen ist.

Die Scheibe 5 weist in der Teilung ihres Klinkenrades 7 Schlitze 15 auf, die sich vom Umfang der Scheibe her gegen deren Radien geneigt in Richtung auf den Zylinderblock 4 erstrecken und an ihrem inneren Ende halbkreisförmig begrenzt sind. In diese Schlitze sind Halter 16 eingeschoben, deren Grundfläche der der Schlitze 15 entspricht und damit von zwei Parallelen begrenzt wird, die einseitig durch einen Halbkreis verbunden sind, gegen den die Geraden als Tangenten gerichtet sind, während das gegenüberliegende Ende durch einen Kreisbogen begrenzt ist, der dem Umfang der Scheibe entspricht. Dieses freie Ende der Halter 16 ist mit einer Querbohrung 17 ausgestattet. Damit werden durch das Distanzstück 2, welches die Scheibe 5 etwa auf 270° ihres Umfanges umzieht, die in Schlitze eingebrachte Halter 16 auch in diesen gehalten. Erst beim durch die Endfläche 18 gebildeten Ende des Distanzgliedes 2 besteht die Möglichkeit, einen Bolzen einer Ausziehvorrichtung in die Querbohrung 17 eines Halters 16 einzubringen und diesen in Richtung der Mittellinie des Schlitzes 15 herauszuziehen. Dicht danach können gereinigte und mit einem neuen Siebpaket bestückte Halter 16 wieder in den Schlitz 15 eingebracht werden, und beim weiteren Transport sorgt die mit zunehmenden Drehwinkel langsam an den Umfang der Scheibe 5 heranführende schräge Stirnfläche 19 für ein vollständiges, exaktes Einschieben des betreffenden Halters 16.

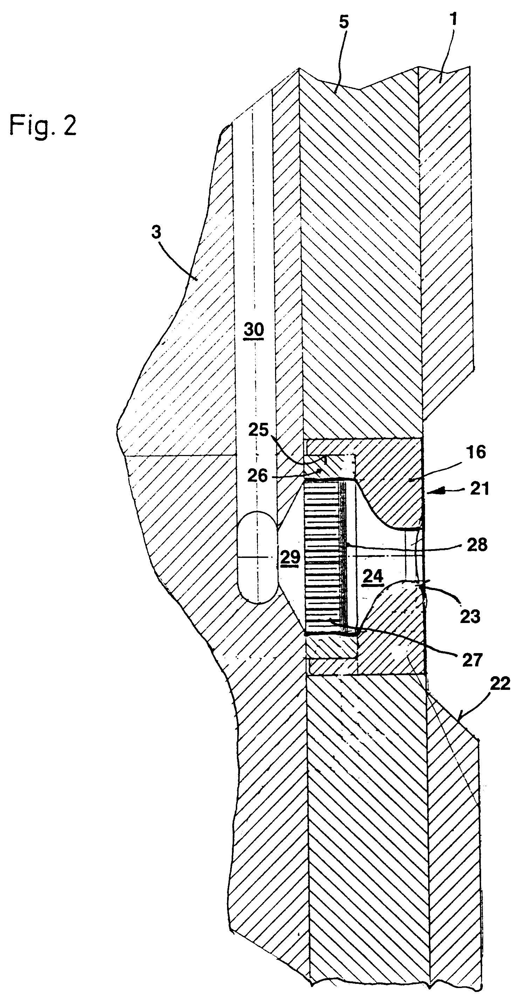

Nach weiterem Drehen der Scheibe 5 wird der eingeschobene Halter 16 aus der Entnahmeposition 20 bzw. Eingabeposition in die Arbeitsstellung 21 verbracht. Die Figur 2 zeigt einen Schnitt durch die Deckplatte 2, die Scheibe 5 mit einem eingebrachten Halter 16 sowie die darunterliegende Grundplatte 3. In der Arbeitsstellung 21 weist die Deckplatte 1 eine Öffnung 22 auf, welche große Teile der Oberfläche des Halters freigibt. Der Halter 16 ist auf seiner freien Seite mit einer Kalotte 23 zum Ansetzen der nicht dargestellten Düse eines Spritzgießaggregates ausgestattet. Vom Grunde dieser Kalotte aus erstreckt sich ein Schmelzekanal 24, der zur Anpassung an den Bedeckungsgrad des Filterpaketes und der Lochplatte sich rasch erweitert. Rückseitig ist der Halter 16 mit einer Ringnut 25 versehen, in die ein Ring 26 eingedrückt ist, der, gegebenenfalls einstückig, die Lochplatte 27 aufweist, jedoch über diese nach rechts hin vorsteht, so daß in die somit gegebene Ausnehmung das die eigentliche Filterung bewirkende Siebpaket 28, bspw. in Form ein- oder mehrlagiger Drahtgewebe, einbringbar ist. Hinter der Lochplatte wird hindurchgetretene Schmelze im Trichter 29 gesammelt und einem oder mehreren Verteilerkanälen 30 für das Werkzeug zugeführt.

Wird die Düse des Spritzgießaggregates gegen die Kalotte 23 gepreßt, so kann durch Hub bspw. der Extruderschnecke der Schuß in das Werkzeug überführt werden. Hierbei durchströmt er zunächst den sich erweiterten Schmelzekanal 24, das Verunreinigungen zurückhaltende Siebpaket 28, die diese stützende Lochplatte 27 und den Schmelzetrichter 29. Durch zweckmäßig exponentielle Erweiterung in Richtung auf das Siebpaket 28 hin und anschließendes Verjüngen wird erreicht, daß die Kunststoffschmelze während des Schusses etwa gleiche Strömungsgeschwindigkeiten aufweist und übermäßige Erwärmungen vermieden werden. Während des Schusses ist durch den Andruck der Düse auf die Kalotte sowohl die Übergangsfläche Düse-Kalotte als auch die Übergangsfläche Stirnfläche des Ringes 26 zur den Schmelzetrichter 29 umgebenden Stützfläche durch entsprechenden Normaldruck in Verbindung mit entsprechend feiner Bearbeitung der abzudichtenden Flächen dichtend geschlossen. Nach dem Schuß bzw. dem Nachdruck wird die Düse angehoben, so daß der Halter innerhalb der ihm innerhalb des Schlitzes 15 gegebenenen Führung sich etwas anzuheben vermag, und andererseits ist der durch die Düse des Spritzgießaggregates ausgeübte Druck durch die Beweglichkeit des Halters 16 innerhalb der Scheibe 5 allein auf die Stützfläche des Ringes 26 beschränkt.

Die außerhalb der Arbeitsstellung 21 stehenden Halter werden nur innerhalb der Schlitze der Scheibe 5 sowie der Führungsflächen des diese über einen weiten Winkel umziehenden Distanzgliedes 2 gehalten, ohne daß starke Kräfte ausgeübt werden.

Um die Zeichnung nicht zu überlasten, sind Vorrichtungen zum Ausziehen der Halter 16 innerhalb ihrer Entnahmeposition 20 nicht dargestellt. Es genügt, darauf hinzuweisen, daß nach Erreichen der Entnahmeposition 20 durch einen Halter 16 ein Entnahmebolzen in dessen Querbohrung 17 einschiebbar ist, so daß der Halter 16 herausgezogen werden kann. Durch Abziehen des Ringes 26 mit der Lochplatte 27 und dem Siebpaket 28 wird dieses frei zugängig und kann entnommen sowie durch ein frisches oder gereinigtes Siebpaket ersetzt werden. Als empfehlenswert hat es sich hierbei gezeigt, die im Schmelzekanal 24 bzw. dem Siebpaket 28 und den Bohrungen der Lochplatte 27 verbliebene Schmelze zu entnehmen, bzw. aufzufangen.

Der Transport der Scheiben 5 um jeweils eine Teilung des Klinkenrades 7 kann selbsttätig nach jeweils einer vorgegebenen Anzahl von Schüssen, bspw. auch nach jedem Schuß, bewirkt werden. Gegebenenfalls zusätzlich kann die Auslösung des Antriebes auch in Abhängigkeit vom Verschmutzungsgrad des Siebpaketes 28 bewirkt werden, bspw. indem der Druck der Schmelze im Düsenbereich des Spritzgießaggregates, gegebenenfalls auch im Schmelzekanal 24 oder im Schmelzetrichter 29, oder aber die am Siebpaket 28 auftretende Druckdifferenz überwacht werden. Der Transport kann jeweils um eine Teilung des Klinkenrades 7 bewirkt werden, wahlweise aber auch um ein mehrfaches desselben, so daß die Verweilzeit von Haltern mit zugesetztem Siebpaket reduziert wird. Schließlich kann der Transport im Bedarfsfalle auch elektrisch oder manuell bewirkt werden. In jedem Falle werden zugesetzte Siebpakete mit ihren Haltern aus der Arbeitsstellung in eine Entnahmeposition gebracht, und das Abdichten der Halter erfolgt ausschließlich in ihrer Arbeitsstellung und betrifft nur die eng begrenzte, die Düse des Spritzgießaggregates aufnehmende Kalotte sowie die gegenüberliegende Stirnfläche des Ringes 26, so daß mit mäßigem Andruck eine hervorragende Dichtung ergebende Flächenpressungen erzielt werden und die Abdichtung nur während des Schusses selbst vorgenommen wird, so daß das Weiterfahren der Halter ohne Belastung durch Anpreßkräfte durchführbar ist.

Der Schmelzefilter kann Bestandteil des Werkzeuges sein. Es hat sich jedoch bewährt, nur ein oder wenige Schmelzefilter zu verwenden und sie jeweils mit dem eingesetzten Werkzeug zu verbinden.

**Patentansprüche**

1. Schmelzefilter für die Reinigung von Kunststoffschmelzen von Spritzgießmaschinen mit einer Schwinge, mittels derer Siebpakete mit diese stützenden Lochplatten in der der Plastifiziereinheit nachgeordneten Schmelzekanal einbringbar sind,
**dadurch gekennzeichnet,**
daß die Schwinge(5) über die den Schmelzeeintritt (Schmelzetricher 29) und den Schmelzeverteilkanal (30) aufweisende Flanke des Werkzeuges geführt ist, und daß die Schwinge (Scheibe 5) Halter (16) umgreift, welche eingangsseitig mit einer Kalotte (23) zum dichtenden Ansetzen der Düse des Spritzgießaggregates ausgestattet sind, und die ausgangsseitig die eingebrachten Siebpakete (28) abstützende Lochplatten (27) aufweisen.

2. Schmelzefilter nach Anspruch 1,
**dadurch gekennzeichnet,**
daß die Halter (16) eine Ringnut (25) aufweisen, in die ein die Lochplatte (27) umschließender oder aufweisender Ring (26) einsetzbar ist.

3. Schmelzefilter nach Anspruch 1 oder 2,
**dadurch gekennzeichnet,**
daß die Schwinge zwischen zwei auf Distanz gehaltenen Platten linear verschiebbar ist.

4. Schmelzefilter nach Anspruch 1 oder 2,
**dadurch gekennzeichnet,**
daß die Schwinge zwischen zwei auf Distanz gehaltenen Platten um eine Schwenkachse (Zylinderblock 4) schwenkbar ist.

5. Schmelzefilter nach einem der Ansprüche 1 oder 2,
**dadurch gekennzeichnet,**
daß die Schwinge als Scheibe (5) ausgebildet ist und zwischen einer Deckplatte (1) und einer Grundplatte (3), die durch ein Distanzstück (2) auf Abstand gehalten sind, um eine Achse (Zylinderblock 4) drehbar ist.

6. Schmelzefilter nach einem der Ansprüche 1 bis 5,
**dadurch gekennzeichnet,**
daß Halter (16) aufnehmende Ausnehmungen der Scheibe (5) als von deren Mitte fortweisende Schlitze (15) mit halbkreisförmigen Grund ausgebildet sind, deren Mittellinien vorzugsweise gegen die Radien der Scheibe geneigt verlaufen.

7. Schmelzefilter nach einem der Ansprüche 1 bis 6,
**dadurch gekennzeichnet,**
daß die Halter (16) jeweils eine Querbohrung (17) für den Eingriff von Entnahmebolzen aufweisen.

8. Schmelzefilter nach einem der Ansprüche 1 bis 7,
**dadurch gekennzeichnet,**
daß die Scheibe (5) von einem Distanzstück (2) über einen Umfangswinkel von ca. 270° umfaßt ist, und daß im seitlich offenen Bereich in einer Entnahmeposition (20) das Entnehmen und Einbringen von Haltern (16) bewirkende Vorrichtungen angeordnet sind.

9. Schmelzefilter nach einem der Ansprüche 1 bis 8,
**dadurch gekennzeichnet,**
daß die Scheibe (5) ein Klinkenrad (7) aufweist oder mit ihm verbunden ist, und daß ihm ein Druckmittelzylinder (12) zugeordnet ist, dessen Kolbenstange (11) bzw. deren Verlängerung mit einem in das Klinkenrad eingreifenden Schaltbolzen (10) ausgestattet ist.

10. Schmelzefilter nach Anspruch 9,
**dadurch gekennzeichnet,**
daß dem Druckmittelzylinder (12) eine Steuervorrichtung zugeordnet ist, welche ihn nach einer vorgegebenen Anzahl von Betätigungzyklen des Spritzgußaggregates und/oder beim Überschreiten eines vorgegebenen Druckwertes der Schmelze betätigt.

EP 0 510 592 A2

Fig.1

Fig. 2